# EUROPEAN PATENT APPLICATION

(11) **EP 1 209 941 A2**
(43) Date of publication of application: **29.05.2002**
(21) Application number: 01309247.3
(22) Date of filing: 31.10.2001
(51) Int. Cl.: H04Q 7/38

(54) **Improved cell handover**

(30) Priority: 21.11.2000 GB 0028378
(71) Applicant: Nokia Corporation, 02150 Espoo (FI)
(72) Inventor: Vestergaard, Peter, 3050 Humiebaek (DK); Dalsgaard, Lars, 90230 Oulu (FI); Jutila, Sami, 90570 Oulu (FI)
(74) Representative: Read, Matthew Charles

(57) **Abstract**

A handover is performed between cells of different networks during a call. A call established between handset (18) and mobile handset MS1 through cell CA1 or mobile network PLMN A is handover during the call to PLMN B through cell CB1. Procedures to control inter-PLMN handovers are described in which the service provider for PLMN A supports the inter-PLMN handover as a supplementary service. Support of the service may be indicated in a classmark stored in EEPROM (9) of handset MS1 or on its SIM card (12). The service provider for PLMN A may include data in the classmark that indicates whether the user of the handset may selectively accept or decline inter-PLMN handovers. A procedure for carrying out a location update after release of the call is also described.

## Description

This invention relates to cellular telecommunications systems and in particular to making a cell handover during a call.

In conventional cellular telecommunications systems, a mobile station such as a mobile telephone handset is in radio contact with a transmitter in an individual cell during the call and, if it is determined that an improved communication path would be established with a different cell, a cell handover procedure is carried out to transfer the call through a transmitter associated with a different cell. The handover is imperceptible to the user of the mobile handset.

Mobile cellular telecommunication systems operate according to different protocols and frequencies. For example, networks that operate according to the GSM recommendations can operate in different frequency bands e.g. GSM 900, GSM 1800 and GSM 1900. Furthermore, different protocols are known such as DAMPS, AMPS and UMTS. Dual mode telephone handsets have been proposed which can operate according to different available standards to enable roaming between networks. For example, dual band handsets have been proposed which operate in different GSM frequency bands. In many instances, networks operating according to GSM 900 have relatively large coverage areas, for example an entire country or state. However, local networks have been proposed operating according to GSM 1800 (DCS) with a much smaller coverage area e.g. a town or city, which may be co-extensive with a GSM 900 network. A user of a dual band telephone handset may wish to use the GSM 1800 network as its home network (HPLMN) and be able to roam to a different network e.g. a GSM 900 network in the event that the user travels outside of the town or city. However, according to conventional roaming procedures, it is not possible to make a call handover between the networks during a call.

The present invention seeks to overcome this difficulty.

According to the present invention there is provided a method of conducting a call in a cellular telecommunications system comprising making a cell handover for a mobile station between cells of different networks during the call.

The networks may operate according to the same protocol but in different bands such as GSM 900 and 1800 but other networks using different protocols could be used as will become evident hereinafter.

A location update may be carried out with the network to which the handover was made, when the call has terminated, so that subsequent calls can be routed to the mobile station.

An HPLMN search may be carried out after the call in an attempt to maintain connection to the HPLMN and derive the benefit of a call tariff associated with the home network. For example, if the network from which the handover was made is the HPLMN, then a HPLMN search at the end of the call is carried out and if the search fails to locate the HPLMN then a location update may be carried out with the network to which the handover was made.

Furthermore, before the end of call, a signal may be sent to the mobile station concerning a behaviour that it is to follow after the end of the call. The behaviour may concern making a location update and/or a network search after the end of the call. This may be achieved by signalling the behaviour in a handover command sent to the mobile station or in a system information message in a control channel associated with a traffic channel for the call.

The method may include selecting whether to allow the handover between cells of the different networks for the call and the handover between the networks may offered to the user of the mobile station as a selectible supplementary service.

Also, the handover may be permitted or barred in dependence upon predetermined control data that may be held in the network or in a memory in the mobile station.

The control data may be used to form part of a classmark for the mobile station which is transmitted to the network to which the call is to be handed over, in order to control whether the handover is to be made. The control data may be pre-set by a service provider for the mobile station. The data in the classmark may be selectively alterable by the user of the mobile station although the service provider may control whether the user is permitted to alter the data.

The invention also includes a cellular telecommunications system including a first network configured to make a cell handover for a mobile station to a cell of a second network during a call.

The invention further includes a mobile station configured for use in a cellular telecommunications system wherein a handover can be made between cells of different networks during a call.

Additionally, the invention provides a smart card for use in a mobile station for a cellular telecommunications system wherein a handover can be made between cells of different networks during a call, the smart card including data for controlling whether the mobile station is permitted to utilise the handover to continue the call.

The smart card may further include data for controlling whether the user of the mobile station is enabled to permit or bar a handover between the networks.

In order that the invention may be more fully understood an embodiment thereof will now be described by way of example with reference to the accompanying drawings in which:
Figure 1 is a schematic illustration of a dual mode mobile telephone handset configured to communicate with different mode PLMNs;
Figure 2 illustrates the coverage areas of PLMN A and PLMN B;
Figure 3 is a schematic block diagram of the circuits of the mobile telephone handset;
Figure 4 is a schematic illustration of the configuration of the networks PLMN A, B together with a PSTN, illustrating the coverage of individual cells;
Figure 5 is a schematic illustration of the cell handover process that occurs during a call, between networks;
Figure 6 is a schematic block diagram of a location update procedure to be followed after release of the call;
Figure 7 is a block diagram of a process for controlling inter-PLMN handovers as a supplementary service;
Figure 8 is a block diagram of a process for producing classmark data to control inter-PLMN handovers;
Figure 9 illustrates how the classmark data is used to control inter-PLMN handovers; and
Figure 10 is a block diagram of the process carried out by PLMN B in response to the classmark data.

### System overview

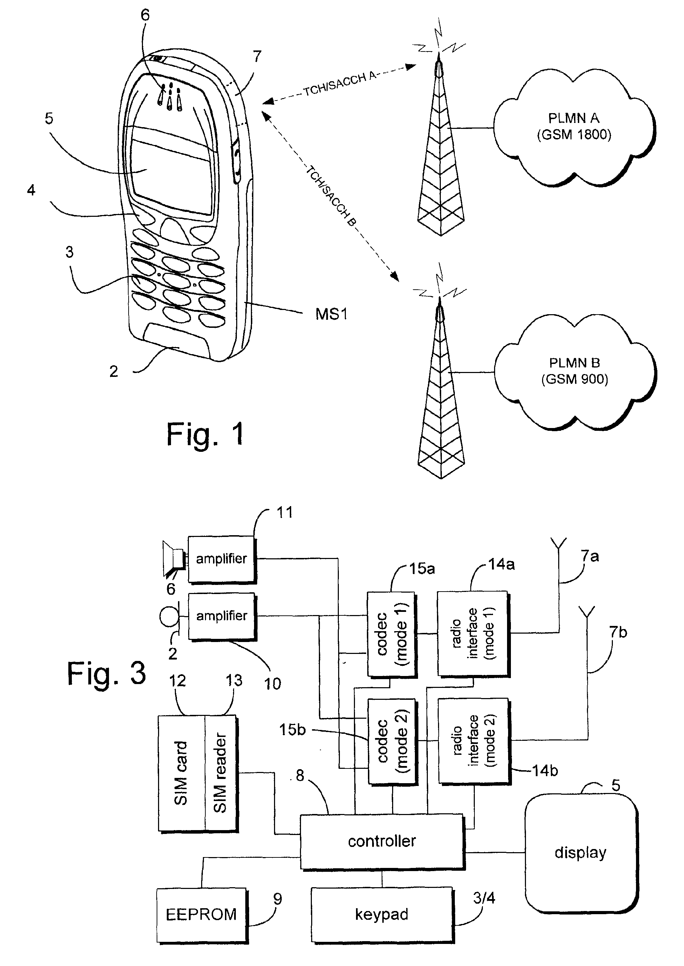

Referring to Figure 1, a mobile station in the form of a mobile telephone handset MS 1 includes a microphone 2, keypad 3, with soft keys 4 which can be programmed to perform different functions, a LCD display 5, an ear-piece 6 and an antenna configuration 7 which is contained within its housing.

The mobile station MS 1 is configured for dual mode operation and can communicate through cellular radio links with different PLMNs shown schematically as PLMN A and PLMN B. In this example, network 1 is the HPLMN but the handset can roam to the network coverage of PLMN B.

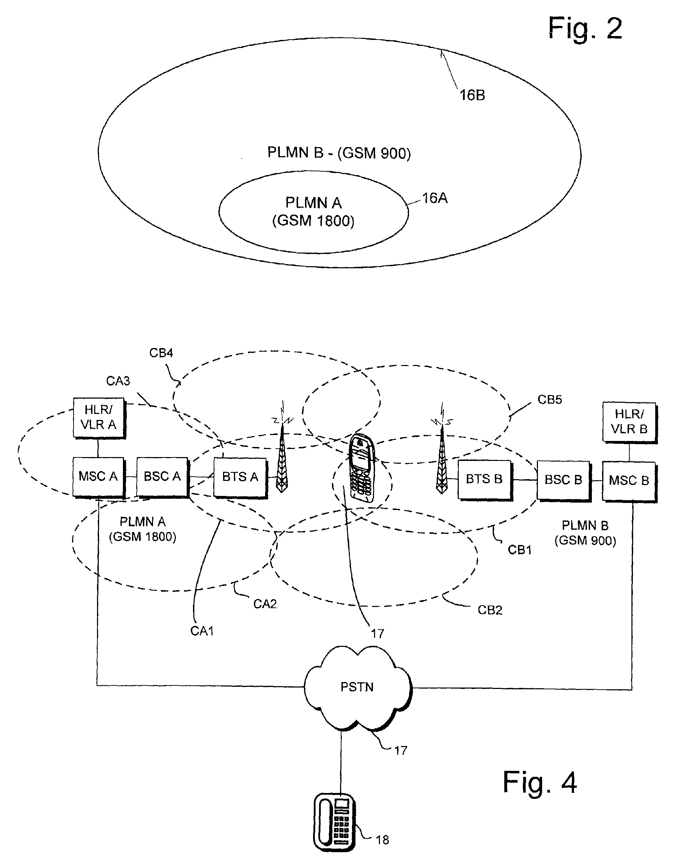

PLMNs A and B may utilise different frequency bands and/or different signal transmission protocols. In this example, PLMN A is a GSM 1800 MHz network with a relatively small coverage area for example a city whereas PLMN B is a GSM 900 MHz network extending over an entire country or state. The coverage areas of the networks are shown schematically in Figure 2.

It will be understood that in this example, the PLMNs A and B use the same general protocols but operate in different frequency bands. However, in another example, the signal protocols used for the two networks may be different. For example, one network may use GSM TDMA type signal protocols whereas the other may use CDMA such as UMTS.

Alternatively, PLMN B may be a GSM 1900 MHz network or a GSM type cellular satellite system, operating in the 200 MHz range.

Figure 3 illustrates the major circuit components of the dual mode telephone handset 1. Signal processing is carried out under the control of a digital micro-controller 8 which has an associated EEPROM 9. Electrical analogue audio signals are produced by microphone 2 and amplified by pre-amplifier 10 .

Similarly, analogue audio signals are fed to ear-piece 6 through an amplifier 11. The micro-controller 8 receives instruction signals from the keypad and soft keys 3, 4 and controls operation of the LCD display 5.

Information concerning the identity of the user is held on a smart card 12 in the form of a GSM SIM card which contains the usual GSM international mobile subscriber identity (IMSI) and an encryption key Kᵢ that is used for encoding the radio transmission in a manner well known *per se.* The SIM card is removably received in a SIM card holder 13.

Radio signals are transmitted and received in separate channels for the different modes of operation. For the first mode, a transmit/receive antenna element 7a is connected through an rf stage 14a to a codec 15a configured to process signals in the first rf transmission mode under the control of the micro-controller 8. Similarly, signals for the second mode of operation are fed through an antenna element 7b connected to rf stage 14b and codec 15b. Considering an example where the first mode of operation is GSM 1800, the codec 15a receives analogue signals from the microphone amplifier 10, digitises them into a format for GSM signals and feeds them to rf stage 14a for transmission through antenna element 7a to PLMN A shown in Figure 1. Similarly, signals received from PLMN A are fed through antenna elements 7a to be demodulated in the rf stage 14a and fed to codec 15a, so as to produce analogue signals fed to the amplifier 11 and ear-piece 6.

Similarly, when roaming to PLMN B, antenna elements 7b, rf stage 14b and codec 15b process signals in a signal format appropriate for PLMN B, in an appropriate frequency band. In this example, PLMN B comprises a GSM 900 network and codec 15b will process appropriate GSM type TDMA signals and the rf stage 14b will be suitably configured for transmitting and receiving GSM type TDMA signals in an appropriate frequency band. In practice, the functionality of the codecs 15a, 15b may be merged into a single unit and provide a single tunable rf stage 14 capable of handling both frequency bands. However, if PLMN B is a CDMA network, then separate channels may be required for the two networks PLMN A,B in the handset.

Referring to Figure 4, PLMN A has a conventional GSM cellular architecture and three cells CA1, 2 and 3 are shown. It will be understood that PLMN A will include many such cellular areas to provide substantially continuous coverage throughout its coverage area 16A shown in Figure 2. Each cell is provided with a base transmission station (BTS) and in Figure 4, BTS A is shown for the cell CA1, the other BTSs being omitted in order to simplify the drawing. In a conventional manner, the BTSs are connected to a base station controller (BSC) and in Figure 4 BTS A is shown connected to BSC A. The BSCs for the network are connected to a mobile services switching centre (MSC). In this example, BSC A is shown connected to MSC A.

A home location register (HLR) provides a list of subscribers registered for use with the network i.e. as a HPLMN. Also, a visitor location register (VLR) is provided to permit subscribers that roam from other networks to be temporarily registered with PLMN A. In this example, the VLR and HLR are illustrated as a combined unit HLR/VLR A.

The PLMN B has a similar architecture with overlapping cells CB1, 2, 3 and 4 being shown in Figure 4 and it will be understood that many more such cells are included in the network for the coverage area 16B shown in Figure 2. The illustrated cells of PLMN B overlap cells of PLMN A. For example, the cells CA1 and CB1 have an overlapping area 17 in which the mobile telephone handset MS1 is located.

A conventional telephone set 18 is illustrated connected through a public switch telephone network (PSTN) 19 which is connected to each of the MSCs of PLMN A and B, i.e. MSC A and MSC B.

Considering the PLMN A in more detail, each cell CA1, 2, etc is provided with a cell broadcast signal BCCH which is used primarily in idle mode i.e. when no call is being made, to provide parameter settings for the mobile stations within the cell. Each cell has a BCCH transmitted on an individual frequency and the BCCHs for each cell contain information concerning the frequencies of the BCCHs in adjacent cells. In so called dedicated mode i.e. during a call, a transmission channel or TCH is established between an individual mobile station and the BTS for the cell concerned. The TCH has an associated slow access control channel or SACCH over which system information is communicated between the BTS and the mobile station during the call.

In dedicated mode, the mobile station monitors the quality of reception of the BCCH both from the current cell and neighbouring cells to determine which provides the best route for the call. The measured signal quality for the currently used cell and the neighbouring cells are transmitted in the SACCH to the BTS so that a decision can be made whether to continue with the current cell or to make a cell handover to an adjacent cell. Thus, in the example shown in Figure 4, when a call is established between BTS A and MS1, the handset MS1 monitors the reception quality from adjacent cells of PLMN A, typically up to six adjacent cells and provides reports of the reception quality on the SACCH to BTS A. If it is determined at BTS A that a cell handover should occur, the call is re-routed by BSC A to a different BTS of the network and the handset is instructed to communicate with the new BTS on a different transmission channel. This cell handover process is well known *per se* and is described in more detail in "The GSM System For Mobile Communications" M. Mouly and M. B. Pautet, Cell & Sys. ISBN 2-9507190-0-7 pp 396-412. Thus, a cell handover can occur within network PLMN A during a call in order to maintain communication, for example when the mobile station moves or when changes in reception quality occur from cell to cell.

In a conventional GSM network, when the user moves beyond the edge of the coverage area of the network, communication can no longer be maintained and the call drops out. Then, in idle mode, the mobile station MS1 attempts to register itself as a roamed user with another network. Thus, conventionally, if mobile station MS1 moves beyond the coverage area of PLMN A, the call will drop out and the user terminal will attempt to register itself with PLMN B, by performing a location update and entering details of its identity in the visitor location register VLR B. A message notifying that the user terminal has roamed to PLMN B is then passed by VLR B to HLR A so that calls can be routed to the handset MS1 through PLMN B by PLMN A. Location updating for roaming is well known *per se* and reference is directed to the GSM System for Mobile Communications *supra* pp 444-450.

Thus, in prior art roaming, the call drops out when a change in network occurs. In many situations, this is an acceptable trade-off because adjacent networks may be in different countries or states and the mobile handset is not often used when travelling between adjacent countries e.g. on an aircraft. However, in the example described above, PLMN A is a GSM 1800 network with a relatively small coverage area e.g. a city and HPLMN users of PLMN A may wish to be able to roam outside of the city area onto PLMN B which has much greater coverage area within the country or state. The subscribers of PLMN A will usually wish to use their home network in preference to PLMN B because under current charging regimes, calls will be cheaper on the home network than on a roamed network.

### Inter-PLMN handover during a call

In accordance with the present invention, subscribers to PLMN A can roam to PLMN B and make a handover between cells of the different networks during a call. To this end, PLMN A has an agreement with PLMN B to allow an inter-PLMN handover.

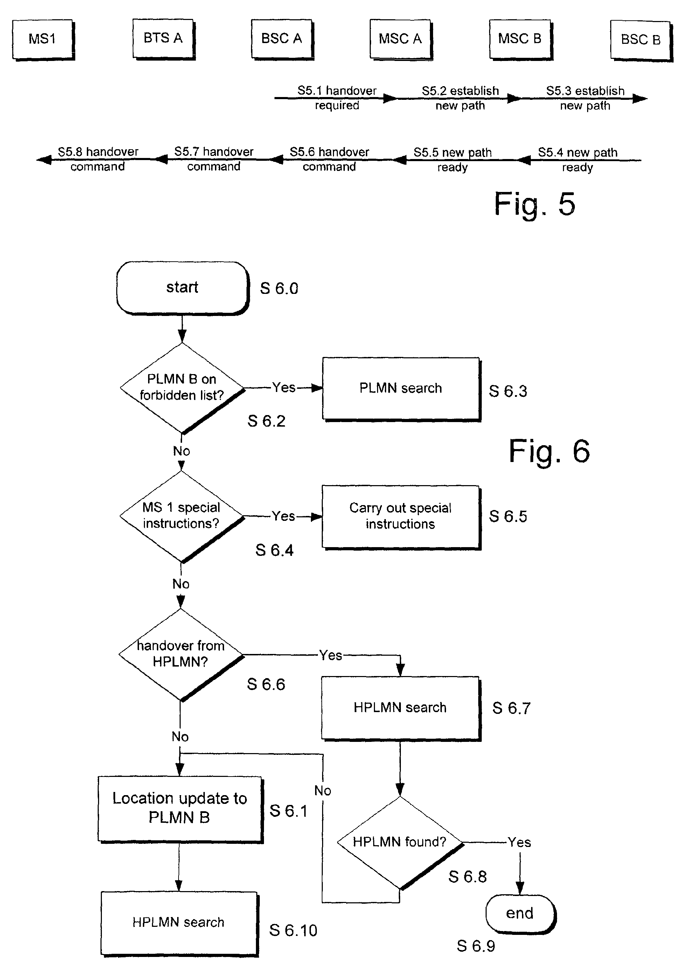

The cell handover procedure will now be described in more detail with reference to Figure 5 in combination with Figure 4. In this example, a call has been established between telephone set 18 and handset MS1 through PSTN 19 and PLMN A. Thus, TCH is established between BTS A and MS1 in cell CA1. As previously explained, MS1 monitors the BCCHs of adjacent cells and up to six adjacent cells can be monitored. In accordance with the invention, the cells can be from both PLMN A and PLMN B. In the arrangement shown in Figure 4, handset MS1 monitors the BCCHs of adjacent cells CA2, CA3, CB2, CB1, CB3 and CB4. Reception signal quality signals are developed for each of the monitored cells, for example by monitoring bit error rate (BER) and the resulting data is sent back to BTS A on the SACCH. The resulting data is passed by BTS A to BSC A.

In a situation where the handset MS1 is moving out of the coverage area of PLMN A i.e. towards cell CB1, the information received at BSC A will indicate that a cell handover is required from cell CA1 to cell CB1, which will involve a handover between networks during the call.

Referring to Figure 5, when it has been determined by BSC A that a handover is required, the corresponding signal is sent at step S5.1 from BSC A to MSC A. Then at step S5.2, MSC A establishes a new path for the call by sending a signal to MSC B. At step S5.3, MSC B signals to BSC B that a new path is to be established for the call. In turn, BSC B opens a path with BTS B (not shown in Figure 5) for communication with MS1 through cell CB1.

BSC B then signals to MSC B at step S5.4 that the new path is ready and similarly MSC B provides a corresponding path ready signal to MSC A at step S5.5. Thus, a new path has been opened by this procedure to allow the call previously routed through the MSC of PLMN A to be re-routed during the call to the MSC of PLMN B.

An instruction is then sent through PLMN A to the handset MS1 in order to instruct it to switch to a new channel associated with PLMN B i.e. a new channel through BTS B. This is carried out by MSC A, which sends a handover command at step S5.6 to BSC A which in turn at step S5.7 sends a handover command to BTS A, which is transmitted at step S5.8 to the handset MS1. The handset then switches to a channel associated with cell CB1 so as to continue the call which is routed by MSC A to MSC B and thence to BTS B via BSC B. The handover occurs seamlessly during the call such that the calling and called parties are not aware that a handover has occurred. The user of MS1 can then move further away from the coverage area of PLMN A during the call, which continues through PLMN B as required without any interruption.

Billing procedures known *per se* are utilised such that PLMN B reports the charge of the call back to PLMN A so as to be recorded at HLR A for subsequent billing to the subscriber.

### Behaviour after termination of the call

When the call terminates, the handset MS1 may have moved outside of the coverage area of PLMN A and so MS1 as a default performs a location update (LU) to PLMN B as a default behaviour, subject to a number of exceptions as will now be described with reference to Figure 6.

The routine of Figure 6 is performed by the micro-controller 8 in the handset MS1 shown in Figure 3. The routine starts at step S6.0 after the call is terminated and a location update to PLMN B is carried out as a default behaviour at step S6.1. However, firstly, at step S6.2, a check is made to see whether PLMN B is on a forbidden list held on SIM card 12. As known in the art, the SIM card may include a list of PLMNs to which roaming is forbidden, for example in a situation where there is no billing agreement between PLMNs. If PLMN B is included in the forbidden list, a search for alternative PLMNs is carried out at step S6.3.

At step S6.4, a check is made to see whether MS1 has special location update instructions which may have been provided to the handset by PLMN A during the call before it terminated, in order to instruct the handset to perform a particular location update procedure according to special instructions. Alternatively or additionally, the special instructions may have been recorded on SIM card 12. In the event of such special instructions, the micro-controller 8 performs a location update procedure according to the special instructions at step S6.5, as will be described in more detail hereinafter.

At step S6.6, the micro-controller 8 determines whether the handover that occurred during the previous call was from the HPLMN. In the above described example, the handover was from PLMN A that constitutes the HPLMN for MS1. In this situation, the micro-controller 8 performs a HPLMN search at step S6.7 by seeking a BCCH for a cell of PLMN A. If it is determined at step S6.8 that the HPLMN has been found, the process terminates at step S6.9 i.e. no location update is performed to PLMN B. The handset MS1 thus remains registered with PLMN A which provides a cheaper tariff than a roaming tariff associated with PLMN B.

However, if the handover in the previous call was not from the HPLMN or no HPLMN was found i.e. MS1 is now outside of the coverage area of PLMN A, then the previously described location update to PLMN B is performed at step S6.1 in order to register MS1 with VLR B. In this way, MS1 can receive and transmit calls through PLMN B as a roamed network.

The routine may at step S6.10 periodically carry out an HPLMN search to determine whether the handset MS1 has returned back into the coverage area of PLMN A so that a location update to. HPLMN can be carried out. This will reduce the cost of calls to the user by returning to the HPLMN which has a cheaper call tariff than the roamed network i.e. PLMN B.

As explained above, the handset MS1 may be provided with special instructions regarding its behaviour after the call has been released. The occurrence of such special instructions is determined at step S6.4 and carried out at step S6.5. The special instructions have been provided to MS1 in system information messages in the SACCH during the call. Thus, in the example described above, the SACCH that is provided during transmission from BTS A to MS1, during the call, may contain special instructions concerning the behaviour of the handset after release of the call. Alternatively, the special instructions may be provided in the handover command shown at step S5.8 in Figure 5.

The special instructions may cause the handset MS1 to carry out one of the following behaviours:
Search for the last registered PLMN first,
search for the HPLMN first,
no restriction on behaviour, or
other behaviours.

Furthermore, the micro-controller 8 may as a default behaviour ignore special instructions given by the last registered PLMN in the event that a handover occurred during the call to the HPLMN. In this way, preference is given to the HPLMN for a subsequent call in order to make use of the generally cheaper tariff associated with the HPLMN.

### Control of inter-PLMN handover

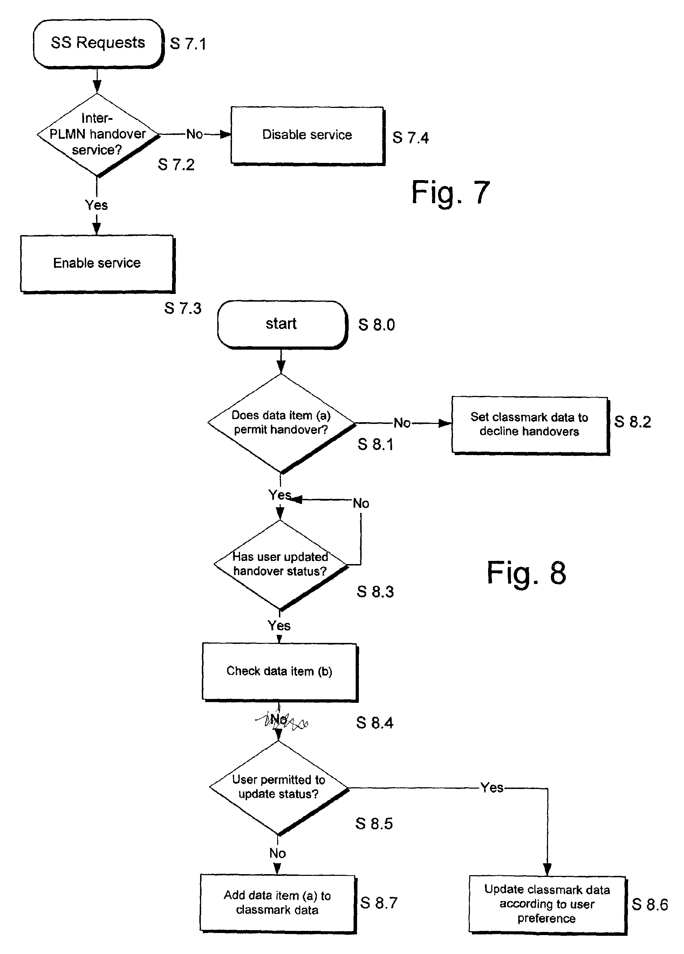

The service provider i.e. the operator of PLMN A may offer the facility of in-call inter-PLMN handover supported as a supplementary service (SS). As known in the art, networks may provide a number of user selectable supplementary services such as voicemail, call divert and others which a user may select individually. A messaging path between the handset MS1 BTS A, BSC A, MSC A and HLR A is provided for supplementary service messages so that the user of MS1 can select them individually. As known in the art, supplementary services can be selected by the user by operation of the keypad 3, to select service options from a menu displayed on the display 5. A procedure for enabling provision of the inter-PLMN handover as a supplementary service is shown in Figure 7. The procedure is carried out in the network, typically at the HLR or MSC. At step S7.1, a determination is made of the SS requests made by the user of MS1. A check is made at step S7.2 to determine whether the user has selected the inter-PLMN handover service. If so, the service is enabled at step S7.3 so that when a handover is required, as determined at step S5.1 in Figure 6, MSC A is enabled to send a new path establishment signal to MSC B at step S5.2 and thereby trigger the handover process as previously described. However, if the supplementary service is not enabled, the handover process is disabled at step S7.4. In this way, MSC A is inhibited from initiating an inter-PLMN handover described with reference to Figure 5.

For an overview of supplementary services management in GSM, reference is directed to the GSM System for Mobile Communications *supra* pp 299-301.

The service provider may also be given an option to indicate to the network to which the handover is to be made, whether or not the service provider for MS1 wishes to engage in an inter-PLMN handover. This provision is particularly useful when roaming between networks neither of which is the HPLMN. According to the invention, the usual classmark associated with the mobile station includes an additional bit which indicated whether an inter-PLMN handover is permitted.

As well known in the art, GSM mobile stations are provided with a classmark which is communicated to the network at the beginning of a radio resource (RR) session and it conventionally includes information relating to the revision level of the GSM specifications, the rf power capability, encryption algorithm frequency capability and short message capability. The classmark is typically recorded in the EEPROM 9 and characterises the hardware of the mobile station.

Additionally, according to the invention, the classmark includes a byte of control data indicating whether the service provider supports inter-PLMN handovers during a call. This byte of data can be provided in the EEPROM 9 or may be recorded on the SIM card 12. An example of the control data is set out in Table 1.

**Table 1**

| **Data Item** | **Description** | **Data** |
|---|---|---|
| (a) | Inter-PLMN handover accept | Yes/No |
| (b) | User update status | Yes/No |

In the above Table, data item (a) comprises inter-PLMN handover accept which signifies whether the service provider supports inter-PLMN handovers during a call. Additionally, data item (b) is provided. This comprises data preprogrammed by the service provider to indicate whether the user of the mobile station is permitted to update the status of the inter-PLMN handover acceptance data. Thus data item (b) allows the service provider to control whether the user of the handset MS1 can enable or disable the inter-PLMN handover service. The service provider may set the data item (b) so that the user is not permitted to update the handover status. Alternatively, the user of the mobile terminal MS1 may be allowed to selectively change whether a handover can occur. It will be understood that the user may not wish to accept the higher charge tariff associated with a handover to a roamed network and so may wish to disable such handovers during a call.

Figure 8 illustrates a routine carried out by the micro-controller 8 to produce classmark data for inclusion into the classmark, in dependence upon the data items (a) and (b) shown in Table 1. At step S8.1, the micro-controller checks whether the inter-PLMN handover accept bit (data item (a)) has been set by the service provider to support inter-PLMN handovers during a call. If not, corresponding data is included in the classmark, to indicate that inter-PLMN handovers are to be declined during a call, as shown at step S8.2.

If however, inter-PLMN handovers are supported by the service provider, a check is carried out at step S8.3 to determine whether the user of MS1 has updated its choice concerning inter-PLMN handovers. If so, the data item (b) is checked at step S8.4. At step S8.5, a determination is made from data item (b) whether the user is permitted by the service provider to make a choice concerning inter-PLMN handovers during a call i.e. whether to accept or decline such handovers. If the user is so permitted, data for the classmark is updated at step S8.6 according to the user's preference i.e. whether the user has decided to accept or decline inter-PLMN handovers during the call. However, if the user is not permitted to make this choice, then classmark data according to data item (a) of Table 1 is included in the classmark so as to provide a setting as determined by the service provider in the data of Table 1, as shown at step S8.7.

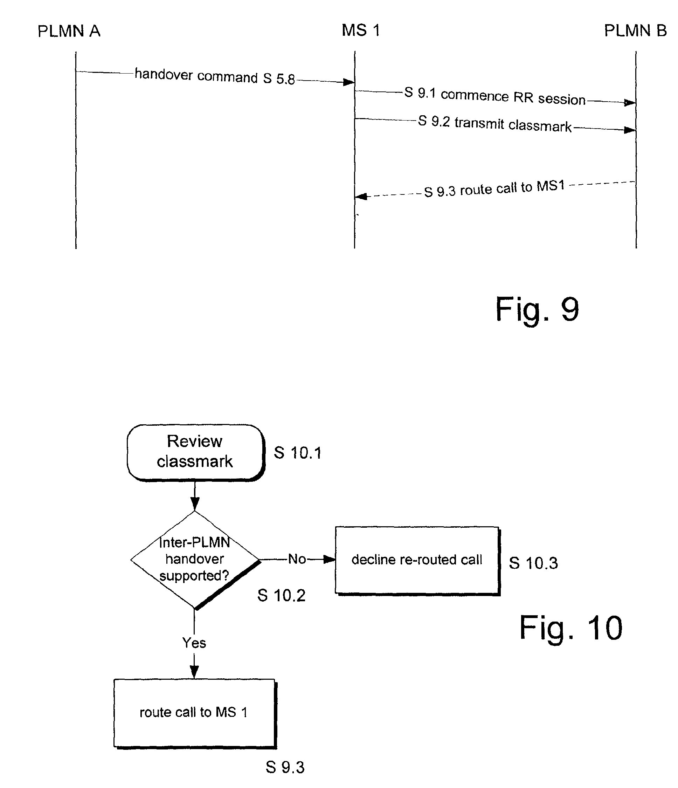

Figure 9 illustrates how the resulting classmark data is used to control inter-PLMN handovers during a call. As previously explained with reference to Figure 5, when a handover is required from PLMN A to PLMN B during a call, a new call path is established through PLMN B (steps S5.1 - S5.3 in Figure 5) and a handover command is sent by PLMN A to the handset MS1 (step S5.7 and step S5.8 in Figure 5).

Referring to Figure 9, the handover command S5.8 is shown, passing from PLMN A to handset MS1. As a result, the handset MS1 commences a RR session with PLMN B in order to prepare itself for establishing a TCH for the call through PLMN B, as shown at step S9.1. As part of the initialisation procedure for the RR session, the classmark data is transmitted to PLMN B by MS1 at step S9.2. As previously explained, the classmark data indicates to PLMN B whether an inter-PLMN handover is to be supported. If not, the call handover is declined. If the handover is to be supported, the call is routed through PLMN B to handset MS1 as shown at step S9.3 i.e. over the new path established through PLMN B by the process previously described with reference to Figure 5.

The classmark data received by PLMN B at step S9.2 is processed by PLMN B as shown in Figure 10. At step S10.1, the received classmark data is reviewed, for example by a processor in MSC B. If at step S10.2 the classmark data indicates that an inter-PLMN handover is to be supported, the call is routed to handset MS1 through PLMN B as shown at step S9.3. However, if the handover is not to be supported, the handover is to be declined by PLMN B as shown at step S10.3.

Many modifications and variations fall within the scope of the invention. For example, although the invention has been described in relation to GSM networks, it will be understood that the invention can be used where one of the networks operates according to a different protocol such as UMTS. The mobile station MS1 need not necessarily be a telephone handset but could be a PDA or other mobile device and may be WAP enabled.

Furthermore, the mobile station may be used for data transmission alternatively or additionally to a voice call and term "call" as used herein covers either possibility together with any other period of information interchange between the mobile station and at least one of the networks.

## Claims

1. A method of conducting a call in a cellular telecommunications system comprising making a cell handover for a mobile station between cells of different networks during the call **characterised by** carrying out a location update with the network to which the handover was made upon termination of the call, except under predetermined circumstances including a situation where the network from which the handover was made is the HPLMN, in which case a HPLMN search is carried out upon termination of the call.

2. A method according to claim 1 including performing a location update with the network to which the handover was made if the search fails to locate the HPLMN.

3. A method according to claim 1 wherein the networks operate according to different protocols.

4. A method according to any preceding claim wherein the predetermined circumstances include a situation in which signals have been provided to the mobile station before the end of call indicating a behaviour that it is to follow after the end of the call, and including carrying out the behaviour upon termination of the call.

5. A method according to claim 4 wherein the behaviour concerns making a location update and/or a network search after the end of the call.

6. A method according to claim 4 or 5 including sending a handover command to the mobile station to initiate the handover, the signalling of said behaviour being sent with the handover command.

7. A method according to claim 4 or 5 wherein the call is made in a traffic channel with an associated control channel and the signalling of said behaviour is sent in a system information message in the control channel.

8. A method according to any preceding claim including selecting whether to allow the handover between cells of the different networks for the call.

9. A method according to claim 8 wherein the handover between the networks is offered to the user of the mobile station as a selectable supplementary service, and including selecting the supplementary service so as to permit or bar the handover.

10. A method according to claim 9 including permitting or barring the handover in dependence upon predetermined control data.

11. A method according to claim 10 wherein the control data is held in the network.

12. A method according to claim 10 wherein the control data is held in a memory in the mobile station.

13. A method according to claim 10 wherein the control data is used to provide data for a classmark for the mobile station and including transmitting the classmark to the network to which the call is to be handed over, so as to control whether the handover is to be made.

14. A method according to claim 10 or 11 wherein the control data is pre-set by a service provider for the mobile station.

15. A method according to claim 13, 14 or 15 wherein the data for the classmark is selectively alterable by the user of the mobile station.

16. A method according to any preceding claim wherein the predetermined circumstances include said mobile station being provided with data indicating that the network to which the handover is to be made is a forbidden network, and including terminating the call if the handover is made to a forbidden network.

17. A cellular telecommunications system configured to perform a method as claimed in any preceding claim.

18. A cellular telecommunications system according to claim 17 wherein the first network is a GSM 1800 or 1900 network and the second network is a GSM 900 network.

19. A mobile station configured to perform a cell handover method as claimed in any one of claims 1 to 16.

20. A mobile station according to claim 19 operable to offer the handover between the networks as a selectable supplementary service, whereby the user may permit or bar the handover.

21. A mobile station according to any one of claims 19 or 20 operable to permit or bar the handover in dependence upon predetermined control data held in a memory.

22. A mobile station according to claim 21 wherein said memory comprises a smart card.

23. A mobile station according to claim 21 wherein said memory comprises an EEPROM.

24. A mobile station according to any one of claims 19 to 23 provided with a classmark that includes data for permitting or barring the handover in dependence on said control data.

25. A mobile station according to any one of claims 19 to 23 wherein the control data is pre-set by a service provider for the mobile station.

26. A mobile station according to claim 24 wherein the classmark data is selectively alterable by the user of the mobile station from the data corresponding to the control data set by the service provider.

27. A mobile station according to any one of claims 19 to 26 and comprising a mobile telephone handset.

28. A mobile station according to any one of claims 19 to 26 and comprising a PDA.

29. A smart card for use in a mobile station for a cellular telecommunications system wherein a handover can be made between cells of different networks during a call, the smart card including data for controlling whether the mobile station is permitted to utilise the handover to continue the call.

30. A smart card according to claim 29 further including data for controlling whether the user of the mobile station can select to permit or bar a handover between the networks.

31. A smart card according to claim 30 and comprising a SIM card for a GSM network.
